# EUROPEAN PATENT SPECIFICATION

(11) **EP 1 124 400 B1**
(45) Date of publication and mention of the grant of the patent: **26.05.2010**
(21) Application number: 01300745.5
(22) Date of filing: 29.01.2001
(51) Int. Cl.: H04W 12/06, H04W 36/00

(54) **Handoff system for wireless communications**
Weiterreichungssystem für drahtlose Kommunikation
Système pour le transfert d'appels en communication sans fil

(30) Priority: 09.02.2000 US 500675
(43) Date of publication of application: 16.08.2001
(73) Proprietor: LUCENT TECHNOLOGIES INC., Murray Hill NJ 07974-0636 (US)
(72) Inventor: Davies, Stephen William, Toronto, ON (CA); VanderVeen, Michaela C., Lincroft, New Jersey 07738 (CA)
(74) Representative: Sarup, David Alexander

(56) References cited:
- EP-A- 1 124 397
- US-A- 5 608 780
- US-A- 5 724 665

## Description

### Technical Field

This invention relates to the art of wireless communication, and more particularly, to a system of handing off communications with a wireless terminal from one base station to another.

### Background of the Invention

Prior art wireless systems have a central controller which determines which base station communicates with a wireless terminal and facilitates transferring, or so-called "handing off', of communication between the wireless terminal from a first base station to a second base station when it is determined that a better communications link can be maintained between the second base station and the wireless terminal than between the first base station and the wireless terminal. Typically, the wireless terminal may assist in the handoff process by providing signal strength measurements to the central controller, while the central controller has ultimate control of the handoff process.

For the purposes of handoff, as well as other reasons, prior art wireless systems that support mobile terminals need to know à priori, such as upon initial system installation, or reinstallation, e.g., upon adding to or removing from the system a base station, the "map" of the base stations. This map includes information about at least which base stations are neighbors, and may also include the frequencies and/or timing parameters used by the various base stations and other such configuration information, depending on the nature of the air interface, i.e., the wireless links between the wireless terminals and the base stations, employed in the system. Typically such information is provided at a high cost by system engineering or planning before constructing the network.

United States Patent No. 5,724,665 issued to Abbasi, et al. teaches an intelligent wireless communication base station that provides communication between individual base stations over an RF radio channel. A control unit in each base station utilizes this communication to facilitate each base station to gather system data regarding the system arrangement of nearby base stations and to facilitate handovers of mobile wireless personal communicators from one base station to a another base station. This control unit is under stored program control and gathers information concerning set up channels of nearby radio ports, a developed list or table of neighbor base stations and signal strength values of nearby channels.

### Summary of the Invention

A method and apparatus according to the present invention are set out in the independent claims, to which the reader is now referred. Preferred features are laid out in the dependent claims.

We have recognized that the cost of wireless systems can be reduced significantly, in accordance with the principles of the invention, through the use of a wireless terminal controlled handoff process by which at least portions of the map of the base stations is discovered and updated. The portion of the map that is discovered by a particular base station is typically its neighbors to which it can possibly hand off a call it is serving. It takes at least one handoff with each such base station neighbor for the particular base station to discover its entire local map, i.e., the map information for all the base stations that surround the particular base station and to which the particular base station can perform handoffs.

More specifically, it is possible that the old base station from which the handoff will occur is not known by the new base station to which the call is being handed. Alternatively, it is possible that the new base station to which the call is being handed is not known by the old base station from which the handoff will occur. Therefore, in accordance with an aspect of the invention, the wireless terminal handoff process is used to supply a base station with information about other base stations with whom the base station can cooperate to perform handoffs. Advantageously, as information is obtained via the wireless terminals as to the other base stations to which a particular base station may make handoffs, the handoff process may subsequently be performed more expeditiously between the particular base station and such other base stations. Further advantageously, the costs associated with the à priori system engineering are avoided.

As part of the handoff process, the wireless terminal tells the new base station to which it is handing off the call the identity of the previous base station from which control is being handed off. The wireless terminal then completes the handoff and begins to be served by the new base station. If the new base station does not have a valid record for the previous base station, it forms a trust relationship with the previous base station and creates a record for it, thus identifying it as a neighbor to which it can perform expedited handoff in response to the control of a wireless terminal.

### Brief Description of the Drawing

In the drawing:
FIG. 1 shows an exemplary network arrangement in accordance with the principles of the invention;
FIG. 2 shows an exemplary process, in flow chart form, for performing a handoff between the base stations of FIG. 1 in accordance with the principles of the invention; and
FIG. 3 shows an exemplary process, in flow chart form, by which one base station gets to know about another base station that it does not currently have a valid entry for, and whose presence it became aware of by virtue of a recent need for a handoff by a wireless terminal.

### Detailed Description

The following merely illustrates the principles of the invention. It will thus be appreciated that those skilled in the art will be able to devise various arrangements which, although not explicitly described or shown herein, embody the principles of the invention and are included within its scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable medium and so executed by a computer or processor, whether or not such computer or processor is explicitly shown.

The functions of the various elements shown in the FIGs., including functional blocks labeled as "processors" may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read-only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementor as more specifically understood from the context.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for.

Unless otherwise explicitly specified herein, the drawings are not drawn to scale.

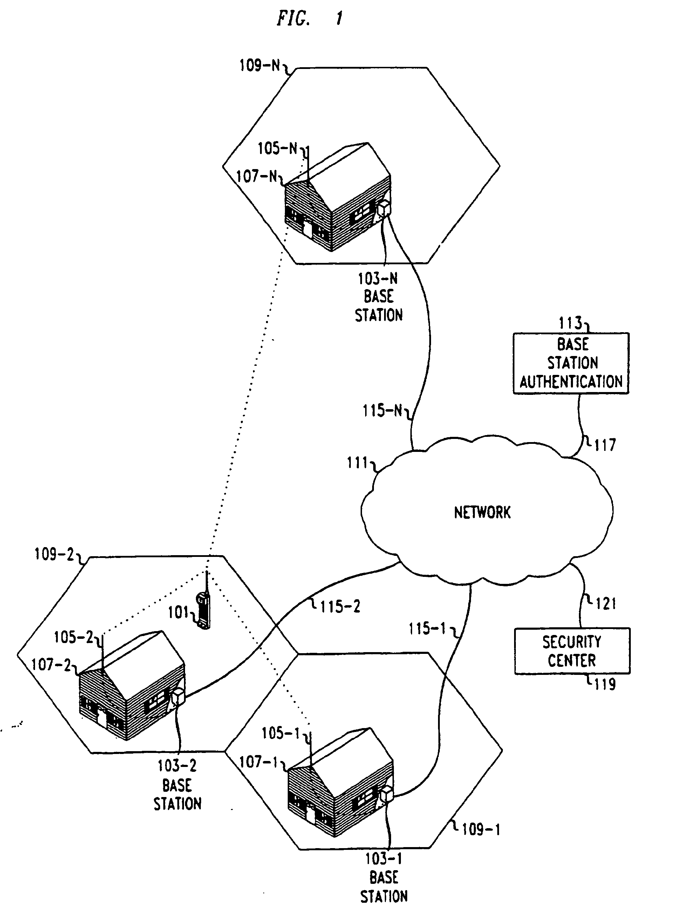

FIG. 1 shows an exemplary network arrangement in accordance with the principles of the invention. Shown in FIG. 1 are a) wireless terminal 101; b) N base stations 103, where N is an integer greater than or equal to 2, including base station 103-1 through 103-N; c) N antennas 105, including antennas 105-1 through 105-N; d) N structures 107, including structures 107-1 through 107-N; e) N cells 109, including cells 109-1 through 109-N; f) network 111; g) base station authentication unit 113; h) N communication links 115, including communication links 115-1 through 115-N; i) communication links 117 and 121; j) security center 119.

Wireless terminal 101 is able to communicate with multiple base stations which transmit with sufficient signal strength to be detected and useable for communication at the current location of wireless terminal 101. Once a signal of sufficient strength is detected for a particular base station, wireless terminal 101 may engage in communication with that base station. The particular types of wireless link and protocol, i.e., the air interface, employed by wireless terminal 101 are not essential to the invention and may be any type desired by the implementor, although of course the radio link and protocol employed by wireless terminal 101 must be the same type employed by base stations 103.

Wireless terminal 101 may achieve communication with multiple base stations in any manner desired by the implementer. For example, wireless terminal 101 may have only a single receiver, and it may receive signals, when not occupied with the exchange of information with the base station currently serving it, from other base stations that have signals of sufficient strength reaching wireless terminal 101. Alternatively, wireless terminal 101 may receive signals from multiple base stations simultaneously, e.g., by employing multiple parallel receivers in wireless terminal 101. Further alternatively, wireless terminal 101 may have more than one receiver, but the number of receivers is less than the number of base stations from which wireless terminal 101 can receive a signal of sufficient strength at its current location, so wireless terminal 101 needs to perform scanning on at least one of its receivers to obtain signals for some of the base stations.

Base stations 103 are substantially conventional base stations except for the following. First, base stations 103 need not be connected to a dedicated network for inter-base-station communication. Instead, base stations 103 can employ a shared public network, e.g., an internet protocol (IP)-based network such as the Internet. Second, each base station 103 need not contain any "map" information. Instead, each of base stations 103 is capable of discovering its necessary portions of the "map" information, in accordance with the principles of the invention. Preferably, base stations 103 are small base stations that can easily be incorporated into a small space, e.g., one that is already available, rather than requiring dedicated construction and site preparation. Advantageously, such small size, coupled with the ability to discover the necessary portions of the "map" information, enable the rapid construction of a new wireless communication network. Furthermore, such a wireless communication network is flexible in its architecture, i.e., base stations can easily be added or removed, and it is also easy to maintain.

Each of antennas 105 are coupled to a respective one of base stations 103. Each of antennas 105 radiates the signal developed by its respective one of base stations 103. Each combination of a one of base stations 103 and its respective one of antennas 105 yields a one of cells 109, which is a particular coverage area. The shape of cells 109 in FIG. 1 do not represent actual cell shapes but instead are merely conventional notation for cells. Note that the shape of the actual various cells 109 are all independent.

Each of structures 107 provides a facility in which to place one or more of base stations 103. Furthermore, structures 107 may also provide a place on which to mount antennas 105. For example, some of structures 107 may be already existing homes in which a one of base stations 103 is located in an unused space and to which a one of antennas 105 is exteriorly affixed.

Network 111 provides a way for base stations 103 to communicate with each other, as well as with base station authentication unit 113 and security center 119. Network 111 may be made up of various subnetworks, which may be networks in their own right. Furthermore, the various subnetworks may be of different types and may employ different protocols. In one embodiment of the invention, network 111 is a packet based network, e.g., an asynchronous transfer mode (ATM) network or an IP network.

Each of base stations 103 is connected to network 111 via a respective one of communication links 115, which may be construed as part of network 111. For example, where network 111, or at least a subnetwork thereof, is an IP network, and one of base stations 103 are located within structures 107 that are homes, communications link 115 may be an Internet connection, e.g., over cable television lines or a fiber-to-the curb connection, that is shared by the base station for communicating with other base stations and by the occupants of the home for Internet browsing.

Base station authentication unit 113 contains a list of all valid base stations 103, and any associated information such as security keys and alternative identifiers or addresses of the base station. A base station may be listed in base station authentication unit 113 at any point. However, the base station only becomes valid once it is listed in base station authentication unit 113. Although shown herein as a single unit, in practice base station authentication unit 113 may be made up of several parts, which need not be geographically collocated. Furthermore, to improve reliability and performance, some or all of the various parts or functions of base station authentication unit 113 may be replicated, as will be readily recognized by those of ordinary skill in the art.

Base station authentication unit 113 is connected to network 111 via communication link 117. Of course, when base station authentication unit 113 is made up of more than one part, or is replicated, communication link 117 is construed as covering all the necessary communications paths between network 111 and the various parts or replicas.

Security center 119 contains a list of all valid wireless terminals that may be served. In addition, security center 119 contains security information, such as authentication challenge-response pairs and/or encryption keys associated with each wireless terminal. The security information may be distributed by security center 119 to base stations 103, as necessary. A wireless terminal may be listed in security center 119 at any point. However, the wireless terminal only becomes valid once it is listed in security center 119. Although shown herein as a single unit, in practice security center 119 may be made up of several parts, which need not be geographically collocated. Furthermore, to improve reliability and performance, some or all of the various parts or functions of security center 119 may be replicated, as will be readily recognized by those of ordinary skill in the art.

Security center 119 is connected to network 111 via communication link 121. Of course, when security center 119 is made up of more than one part, or is replicated, communication link 121 is construed as covering all the necessary communications paths between network 111 and the various parts or replicas.

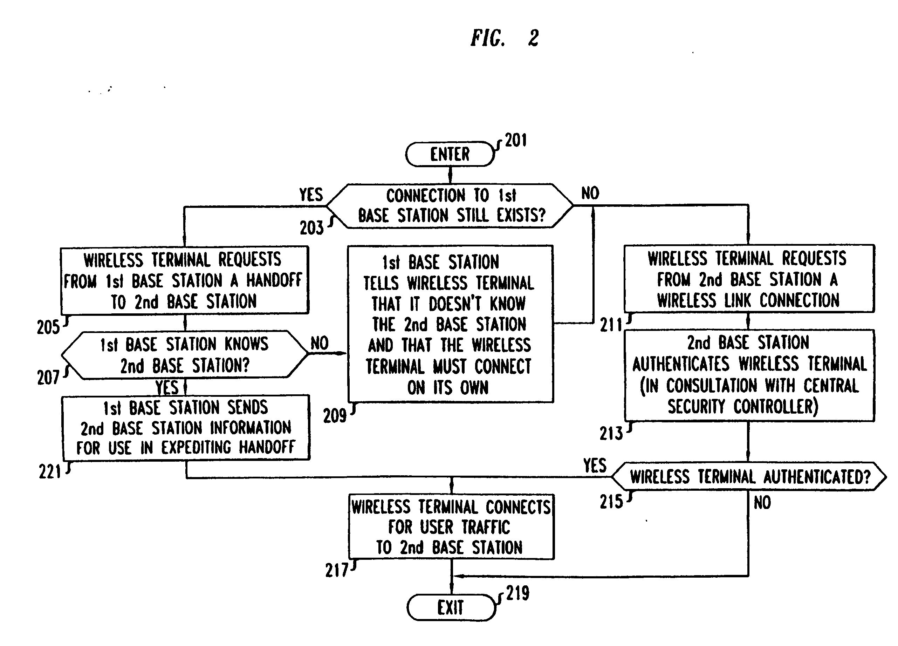

FIG. 2 shows an exemplary process, in flow chart form, for performing a handoff of wireless terminal 101 between the base stations of FIG. 1, in accordance with the principles of the invention. More specifically, in accordance with an aspect of the invention, as part of the handoff process, a base station may discover and update at least portions of the "map". The portion of the map that is discovered by a particular base station, i.e., the base station's local map, is typically its neighbors to which it can possibly handoff a call it is serving. It takes at least one handoff with each such base station neighbor for the particular base station to discover its entire local map.

The process is entered in step 201 when it is determined that a wireless terminal, e.g., wireless terminal 101 (FIG. 1), requires a handoff, because the signal of the radio link of the base station with which it is communicating, e.g., base station 103-1 of FIG. 1, has become sufficiently weaker than that of another particular base station, e.g., base station 103-2 of FIG. 1, so that it appears that the other particular base station could provide a better radio link. Next conditional branch point 203 (FIG. 2) tests to determine if the connection to the first base station, e.g., base station 103-1 of FIG. 1, still exists, since it is possible that the received signal from the first base station became so weak at the wireless terminal, or the signal received at the first base station from the wireless terminal became so weak, that the connection between the first base station and the wireless terminal has become severed prior to a handoff being achieved. If the test result in step 203 is YES, indicating that that the connection continues to exist between the first base station and the wireless terminal, control passes to step 205, in which the wireless terminal requests a handoff from the first base station to the second base station, e.g., base station 103-2 of FIG. 1. Alternatively, the wireless terminal may send various measurements of the signal strengths as received at the wireless terminal for the first and second base stations to the first base station, which determines that it is an appropriate time for a handoff. The first base station therefore tells the wireless terminal to connect to the second base station.

Next, conditional branch point 207 tests to determine if the first base station "knows" the second base station, i.e., the first base station has the second base station listed in its "map" information, such a listing having been the result of a previous handoff of a wireless terminal between the first and second base stations. More specifically, as part of the listing in the map information, the first base station may know a) the base station identification of the second base station, b) the network address of the second base station, e.g., its IP address, and c) security information, such as the public key of the second base station, which is used to secure communication between the first and second base stations. If the test result in step 207 is NO, indicating the first base station does not "know" the second base station, control passes to step 209, in which the first base station tells the wireless terminal that it does not know the second base station and that the wireless terminal must arrange for a wireless link connection with the second base station on its own. This may be achieved, for example, by using the same process that a wireless terminal uses to establish an initial wireless link with a base station when it first powers up within the cell served by that base station, as described further hereinbelow.

If the test result in step 203 is NO, indicating that the connection from the wireless terminal to the first base station had been terminated, or after step 209, control passes to step 211, in which the wireless terminal requests that the second base station establish with it a wireless link. In response to this request, the second base station attempts to authenticate the wireless terminal, which may require use of information stored in a security center, e.g., security center 119 of FIG. 1, in step 213. Thereafter, conditional branch point 215 tests to determine if the wireless terminal was successfully authenticated.

If the test result in step 215 is YES, indicating that the wireless terminal is allowed to utilize the base stations for communication, control passes to step 217, in which the wireless terminal is connected for carrying user traffic to the second base station. As part of this step, other portions of the network which were transmitting data to the wireless terminal via the first base station are instructed to now transmit their data to the wireless terminal via the second base station, e.g., using the techniques of the weil known Mobile Internet Protocol. Thereafter, the process is exited in step 219.

If the test result in step 215 is NO, indicating that the wireless terminal is not allowed to utilize the base stations for communication, control passes to step 219 and the process is exited.

If the test result in step 207 is YES, indicating the first base station "knows" the second base station, control passes to step 221, in which the first base station sends the second base station information to expedite the handoff process, in accordance with an aspect of the invention. Such expediting information may include a) an indication that it is OK to take the handoff, i.e., the wireless terminal is permitted to make use of the base stations, b) security information associated with the wireless terminal, such as authentication challenge-response pairs and/or encryption keys, and c) any data not yet sent by the first base station to the wireless terminal. Thereafter, control passes to step 217 and the process continues as described above.

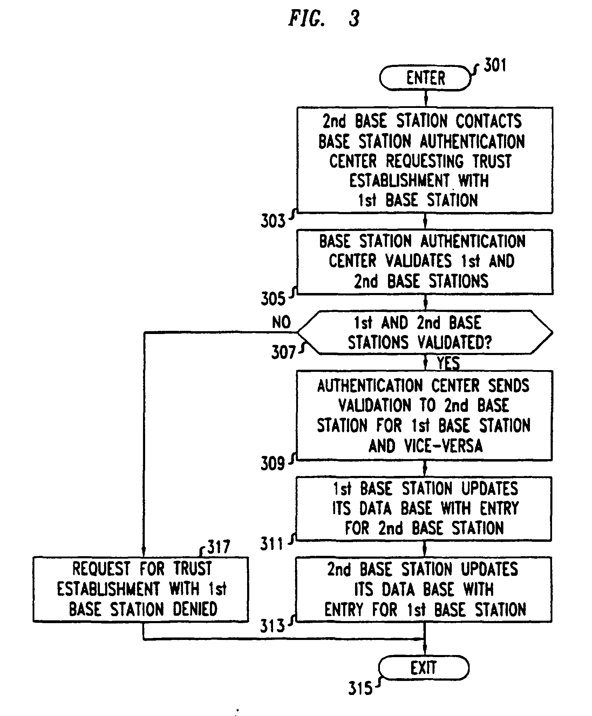

FIG. 3 shows an exemplary process, in flow chart form, by which one base station gets to know about another base station that it does not currently have a valid entry for, and whose presence it became aware of by virtue of a recent need for a handoff by a wireless terminal. The process is entered in step 301 after there is a request for a nonexpedited handoff by a wireless terminal, e.g., at any point after execution of step 211 of FIG. 2. In such a case the second base station wants to know about the first base station.

In step 303, the second base station, e.g. base station 103-2 of FIG. 1, contacts a base station authentication unit, e.g., base station authentication unit 113 of FIG. 1, requesting the establishment of a trust relationship with the first base station. Next, in step 305, the base station authentication unit looks up the first and second base stations in its list, and attempts to determine if they are who they say they are, e.g., using a challenge response process. Conditional branch point 307 tests to determine if both the first and second base stations are valid. If the test result in step 307 is YES, indicating that both the first and second base stations are valid, control passes to step 309, in which the base station authentication unit sends a validation message for the first base station to the second base station and for the second base station to the first base station. This message may also include additional information such as network addresses and security information. Alternatively, the first and second base stations may exchange such additional information among themselves.

In step 311, in response to receipt of the message regarding the second base station, the first base station updates its data base with an entry for the second base station, in accordance with an aspect of the invention. As a result, the first base station will now "know" the second base station and will be able to perform expedited handoffs with it. Similarly, in step 313, in response to receipt of the message regarding the first base station, the second base station updates its data base with an entry for the first base station, in accordance with the principles of the invention. As a result, the second base station will now "know" the first base station and will be able to perform expedited handoffs with it. Thereafter the process is exited in step 315.

If the test result in step 307 is NO, indicating that at least one of the first and second base stations is not valid, control passes to step 317, in which the request for the establishment of a trust relationship with the first base station is denied, in accordance with an aspect of the invention. This may be achieved by an explicit denial message or implicitly by a failure to receive a validation message within a defined time period. Thereafter the process is exited in step 315.

In an alternative embodiment of the invention, the process of FIG. 3 may be entered after step 207 (FIG. 2) when the test result in step 207 is NO. In such an alternative embodiment, however, the roles of first base station and second base station are interchanged.

Note that in an alternative embodiment of the invention, the request for a handoff may not come from, or be controlled by, the wireless terminal. Instead, the request for a handoff, or the decision to perform the handoff, may be originated by a base station, typically using information obtained from the wireless terminal.

## Claims

1. A method for performing network discovery in a wireless communication network having at least first and second base stations and a least one wireless terminal, the method being **Characterized by** the steps of:
receiving a request for a handoff of said wireless terminal between said first base station and said second base station;
determining if said second base station knows said first base station prior to receiving said request; and
when the result of said determining step is that said second base station did not know said first base station prior to receiving said request, recording in said second base station that it can engage in handoffs with said first base station.

2. The method as defined in claim 1 **Characterized in that** said first base station is serving said wireless terminal prior to said request.

3. The method as defined in claim 1 **Characterized in that** said second base station is serving said wireless terminal prior to said request.

4. The method as defined in claim 1 **Characterized in that** said request for said handoff is received from said wireless terminal.

5. The method as defined in claim 4 **Characterized in that** said wireless terminal which identifies said first and second base stations as part of said request.

6. The method as defined in claim 2 **Characterized in that** said request for a handoff is transmitted from said first base station and is received by said second base station.

7. The method as defined in claim 3 **Characterized in that** said request for a handoff is transmitted from first base station and is received by said second base station.

8. The method as defined in claim 1 **Characterized in that** said recording step is performed only when said first base station successfully authenticates said second base station.

9. The method as defined in claim 1 **Characterized in that** said request is received in a wireless format directly from said wireless terminal.

10. The method as defined in claim 1 **Characterized in that** said first base station and said second base station communicate via a wired network.

11. The method as defined in claim 1 **Characterized in that** said first base station and said second base station communicate via a packet network.

12. The method as defined in claim 1 **Characterized in that** said first base station and said second base station communicate via an internet protocol network.

13. The method as defined in claim 1 **Characterized in that** said request identifies said first base station to said second base station.

14. The method as defined in claim 1 further **Characterized by** the steps of:
when said first base station did not know said second base station prior to receipt of said request, recording in said first base station that it can engage in handoffs with said second station.

15. The method as defined in claim 1 further **Characterized by** the step of:
when said second base station did not know said first base station prior to receiving said request, performing an nonexpedited handoff between said first and second base station.

16. The method as defined in claim 1 further **Characterized by** the step of:
when said second base station did not know said first base station prior to receiving said request, establishing a new connection between said wireless terminal and said second base station.

17. The method as defined in claim 1 further **Characterized by** the step of:
when said second base station did not know said first base station prior to receiving said request, establishing a new connection between said wireless terminal and said first base station.

18. A first base station adapted for performing network discovery in a wireless communication network, said first base station (103) **Characterized by**:
means for receiving at said first base station a handoff request to a second base (103) station from a wireless terminal (101);
means for authenticating (103, 113, 303,) said second base station by said first base station;
means for recording (103, 311, 313) in said first base station that said second base station is a neighboring base station.

19. The first base station as defined in claim 18 further **Characterized in that** expedited handoffs may be made to said neighboring base station.

## Patentansprüche

1. Ein Verfahren zum Durchführen der Netzwerkübersicht in einem drahtlosen Kommunikationsnetzwerk mit mindestens einer ersten und einer zweiten Basisstation und mindestens einem drahtlosen Endgerät, wobei das Verfahren durch die folgenden Schritte **gekennzeichnet** ist:
Empfangen einer Anforderung für einen Handoff des besagten drahtlosen Endgeräts von der besagten ersten Basisstation an die besagte zweite Basisstation;
Ermitteln, ob die besagte zweite Basisstation die besagte erste Basisstation kennt, bevor sie die besagte Anforderung empfängt; und
wenn die Antwort auf den besagten Schritt des Ermittelns lautet, dass die besagte zweite Basisstation die besagte erste Basisstation vor dem Empfang der besagten Anforderung nicht kannte, Registrieren in der besagten zweiten Basisstation, dass sie sich an Handoffs mit der besagten ersten Basisstation beteiligen kann.

2. Das Verfahren nach Anspruch 1, **dadurch gekennzeichnet, dass** die besagte erste Basisstation das besagte drahtlose Endgerät vor der besagten Anforderung bedient.

3. Das Verfahren nach Anspruch 1, **dadurch gekennzeichnet, dass** die besagte zweite Basisstation das besagte drahtlose Endgerät vor der besagten Anforderung bedient.

4. Das Verfahren nach Anspruch 1, **dadurch gekennzeichnet, dass** die besagte Anforderung für einen Handoff von dem besagten drahtlosen Endgerät empfangen wird.

5. Das Verfahren nach Anspruch 4, **dadurch gekennzeichnet, dass** das besagte drahtlose Endgerät die besagte erste und die besagte zweite Basisstation als Bestandteil der besagten Anforderung identifiziert.

6. Das Verfahren nach Anspruch 2, **dadurch gekennzeichnet, dass** die besagte Anforderung für einen Handoff von der besagten ersten Basisstation gesendet und an der besagten zweiten Basisstation empfangen wird.

7. Das Verfahren nach Anspruch 3, **dadurch gekennzeichnet, dass** die besagte Anforderung für einen Handoff von der ersten Basisstation gesendet und von der besagten zweiten Basisstation empfangen wird.

8. Das Verfahren nach Anspruch 1, **dadurch gekennzeichnet, dass** der Schritt des Registrierens nur durchgeführt wird, wenn die besagte erste Basisstation die besagte zweite Basisstation erfolgreich authentifiziert.

9. Das Verfahren nach Anspruch 1, **dadurch gekennzeichnet, dass** die besagte Anforderung direkt von dem besagten drahtlosen Endgerät in einem drahtlosen Format empfangen wird.

10. Das Verfahren nach Anspruch 1, **dadurch gekennzeichnet, dass** die besagte erste und die besagte zweite Basisstation über ein drahtloses Netzwerk kommunizieren.

11. Das Verfahren nach Anspruch 1, **dadurch gekennzeichnet, dass** die besagte erste und die besagte zweite Basisstation über ein paketbasiertes Netzwerk kommunizieren.

12. Das Verfahren nach Anspruch 1, **dadurch gekennzeichnet, dass** die besagte erste und die besagte zweite Basisstation über ein Internet-Protokoll-Netzwerk kommunizieren.

13. Das Verfahren nach Anspruch 1, **dadurch gekennzeichnet, dass** die besagte Anforderung die besagte erste Basisstation für die besagte zweite Basisstation identifiziert.

14. Das Verfahren nach Anspruch 1, weiterhin **gekennzeichnet durch** den folgenden Schritt:
Wenn die besagte erste Basisstation die besagte zweite Basisstation vor dem Empfang der besagten Anforderung nicht kannte, Registrieren in der besagten ersten Basisstation, dass sie sich an Handoffs mit der besagten zweiten Basisstation beteiligen kann.

15. Das Verfahren nach Anspruch 1, weiterhin **gekennzeichnet durch** den folgenden Schritt:
Wenn die besagte zweite Basisstation die besagte erste Basisstation vor dem Empfang der besagten Anforderung nicht kannte, Durchführen eines nicht verkürzten Handoffs zwischen der ersten und der zweiten Basisstation.

16. Das Verfahren nach Anspruch 1, weiterhin **gekennzeichnet durch** den folgenden Schritt:
Wenn die besagte zweite Basisstation die besagte erste Basisstation vor dem Empfang der besagten Anforderung nicht kannte, Aufbauen einer neuen Verbindung zwischen dem besagten drahtlosen Endgerät und der besagten zweiten Basisstation.

17. Das Verfahren nach Anspruch 1, weiterhin **gekennzeichnet durch** den folgenden Schritt:
Wenn die besagte zweite Basisstation die besagte erste Basisstation vor dem Empfang der besagten Anforderung nicht kannte, Aufbauen einer neuen Verbindung zwischen dem besagten drahtlosen Endgerät und der besagten ersten Basisstation.

18. Eine erste Basisstation, dazu ausgelegt, eine Netzwerkübersicht in einem drahtlosen Kommunikationsnetzwerk durchzuführen, wobei die besagte erste Basisstation (103) **gekennzeichnet ist durch**:
Mittel zum Empfangen, an der ersten Basisstation, einer Anforderung für einen Handoff an eine zweite Basisstation (103) von einem drahtlosen Endgerät (101);
Mittel zum Authentifizieren (103, 113, 303) der besagten zweiten Basisstation **durch** die besagte erste Basisstation;
Mittel zum Registrieren (103, 311, 313) in der besagten ersten Basisstation, dass die besagte zweite Basisstation eine benachbarte Basisstation ist.

19. Die erste Basisstation nach Anspruch 18, weiterhin **dadurch gekennzeichnet, dass** verkürzte Handoffs an die besagte benachbarte Basisstation durchgeführt werden können.

## Revendications

1. Procédé pour réaliser une découverte de réseau dans un réseau de communications sans fil présentant au moins une première et une deuxième stations de base et au moins un terminal sans fil, le procédé étant **caractérisé par** les étapes suivantes :
recevoir une demande pour un transfert d'appel dudit terminal sans fil entre ladite première station de base et ladite deuxième station de base ;
déterminer si ladite deuxième station de base connaît ladite première station de base avant de recevoir ladite demande ; et
lorsque le résultat de ladite étape de détermination est que ladite deuxième station de base ne connaissait pas ladite première station de base avant de recevoir ladite demande, enregistrer dans ladite deuxième station de base que celle-ci peut réaliser des transferts d'appel avec ladite première station de base.

2. Procédé selon la revendication 1 **caractérisé en ce que** ladite première station de base dessert ledit terminal sans fil avant ladite demande.

3. Procédé selon la revendication 1 **caractérisé en ce que** ladite deuxième station de base dessert ledit terminal sans fil avant ladite demande.

4. Procédé selon la revendication 1 **caractérisé en ce que** ladite demande pour ledit transfert d'appel provient dudit terminal sans fil.

5. Procédé selon la revendication 4 **caractérisé en ce que** ledit terminal sans fil identifie lesdites première et deuxième stations de base dans le cadre de ladite demande.

6. Procédé selon la revendication 2 **caractérisé en ce que** ladite demande de transfert d'appel est transmise à partir de ladite première station de base et est reçue par ladite deuxième station de base.

7. Procédé selon la revendication 3 **caractérisé en ce que** ladite demande de transfert d'appel est transmise à partir de la première station de base et est reçue par ladite deuxième station de base.

8. Procédé selon la revendication 1 **caractérisé en ce que** ladite étape d'enregistrement est effectuée uniquement lorsque ladite première station de base authentifie avec succès ladite deuxième station de base.

9. Procédé selon la revendication 1 **caractérisé en ce que** ladite demande est reçue dans un format sans fil directement à partir dudit terminal sans fil.

10. Procédé selon la revendication 1 **caractérisé en ce que** ladite première station de base et ladite deuxième station de base communiquent par l'intermédiaire d'un réseau câblé.

11. Procédé selon la revendication 1 **caractérisé en ce que** ladite première station de base et ladite deuxième station de base communiquent par l'intermédiaire d'un réseau à paquets.

12. Procédé selon la revendication 1 **caractérisé en ce que** ladite première station de base et ladite deuxième station de base communiquent par l'intermédiaire d'un réseau de protocole Internet.

13. Procédé selon la revendication 1 **caractérisé en ce que** ladite demande identifie ladite première station de base par rapport à ladite deuxième station de base.

14. Procédé selon la revendication 1 **caractérisé en outre par** les étapes suivantes :
lorsque ladite première station de base ne connaissait pas ladite deuxième station de base avant de recevoir ladite demande, enregistrer dans ladite première station de base qu'elle peut réaliser des transferts d'appel avec ladite deuxième station de base.

15. Procédé selon la revendication 1 **caractérisé en outre par** l'étape suivante :
lorsque ladite deuxième station de base ne connaissait pas ladite première station de base avant de recevoir ladite demande, exécuter un transfert d'appel non accéléré entre lesdites première et deuxième stations de base.

16. Procédé selon la revendication 1 **caractérisé en outre par** l'étape suivante :
lorsque ladite deuxième station de base ne connaissait pas ladite première station de base avant de recevoir ladite demande, établir une nouvelle connexion entre ledit terminal sans fil et
ladite deuxième station de base.

17. Procédé selon la revendication 1 **caractérisé en outre par** l'étape suivante :
lorsque ladite deuxième station de base ne connaissait pas ladite première station de base avant de recevoir ladite demande, établir une nouvelle connexion entre ledit terminal sans fil et ladite première station de base.

18. Première station de base adaptée pour réaliser une découverte de réseau dans un réseau de communications sans fil, ladite première station de base (103) étant **caractérisée par** :
moyens pour recevoir dans ladite première station de base une demande de transfert d'appel destinée à la deuxième station de base (103) et provenant d'un terminal sans fil (101) ;
moyens pour authentifier (103, 113, 303,) ladite deuxième station de base à l'aide de ladite première station de base ;
moyens pour enregistrer (103, 311, 313), dans ladite première station de base, que ladite deuxième station de base est une station de base voisine.

19. Première station de base selon la revendication 18 **caractérisée en outre en ce que** des transferts d'appel accélérés peuvent être exécutés vers ladite station de base voisine.
